# DEMANDE DE BREVET EUROPEEN

(11) **EP 0 618 748 A1**
(43) Date de publication de la demande: **05.10.1994**
(21) Numéro de dépôt: 94200810.3
(22) Date de dépôt: 25.03.1994
(51) Int. Cl.: H04Q 11/04, H04J 3/16

(54) **Dispositif et système de multiplexage d'informations pour réseau ATM**

(30) Priorité: 31.03.1993 FR 9303776
(71) Demandeur: PHILIPS COMMUNICATION D'ENTREPRISE, 75013 Paris (FR); Philips Electronics N.V., 5621 BA Eindhoven (NL)
(72) Inventeur: Tibi, Georges, Société Civile S.P.I.D., F-75008 Paris (FR); Callemyn, Jean-Michel, Société Civile S.P.I.D., F-75008 Paris (FR)
(74) Mandataire: Chaffraix, Jean

(57) **Abrégé**

Ce dispositif comporte : une pluralité de bornes d'accès (180₁ à 180_{N}) pour des utilisateurs ayant des informations à transmettre vers une certaine destination avec un certain débit, une pluralité de bornes de raccord (170 à 173) pour une pluralité de points d'accès dudit réseau, une pluralité de circuits de service (C₁ à C_{M}) munis d'organes de files d'attente (205₁ à 205ₚ) pour emmagasiner des données d'utilisateur et pour fournir sur des sorties de données (S₁ à S_{M}) les cellules à transmettre, une ligne commune de données (200) interconnectant les sorties de données desdits circuits de service, une pluralité de circuits de réseau (R0 à R3) munis de circuits de sortie dont les entrées sont connectées à ladite ligne de données et dont les sorties sont connectées auxdites bornes de raccord.

Ce dispositif comporte, en outre : un organe d'allocation pour allouer des temps de prélèvement de cellules sur ladite ligne de données à chacun des circuits de sortie en fonction du débit à écouler par lesdits circuits de sortie.

Application aux réseaux A.T.M.

## Description

La présente invention concerne un dispositif de multiplexage d'informations pour un réseau du genre A.T.M., notamment, qui transmet d'un de ses points d'accès à un autre des cellules d'informations, dispositif comportant :
- une pluralité de bornes d'accès pour des utilisateurs ayant des informations à transmettre vers une certaine destination avec un certain débit,
- une pluralité de bornes de raccord pour une pluralité de points d'accès dudit réseau,
- une pluralité de circuits de service munis d'organes de files d'attente pour emmagasiner des données d'utilisateur et pour fournir sur des sorties de données les cellules à transmettre,
- une ligne commune de données interconnectant les sorties de données desdits circuits de service,
- une pluralité de circuits de réseau munis de circuits de sortie dont les entrées sont connectées à ladite ligne de données et dont les sorties sont connectées auxdites bornes de raccord.

La présente invention concerne également un système comprenant un tel dispositif.

Les réseaux A.T.M. se répandent de plus en plus et pour les utiliser au maximum des possibilités qu'ils offrent, il convient de multiplexer les données que l'utilisateur veut transmettre.

Un dispositif de ce genre qui peut effectuer des opérations de multiplexage est connu de la demande de brevet n° 2 670 972.

Ce dispositif connu est formé de joncteurs d'entrée dont les fonctions peuvent être assimilées aux circuits de service précités et des joncteurs de sortie assimilables aux circuits de réseau.

Tous les joncteurs, tant de sortie que d'entrée, doivent avoir des caractéristiques identiques puisqu'on doit effectuer des opérations de brassages pour lesquelles toute cellule à l'entrée de n'importe quel joncteur d'entrée peut aller à la sortie de n'importe quel joncteur de sortie. Cependant, en ce qui concerne les opérations de multiplexage, les utilisateurs pour se connecter à un réseau A.T.M. peuvent utiliser des liaisons qui assurent des débits différents : fibres optiques, lignes téléphoniques... Le dispositif connu ne donne aucune mesure spéciale pour adapter les joncteurs de sortie au débit offert par la liaison à laquelle ils sont connectés. Il en découle qu'il faut prévoir des files d'attente au niveau des joncteurs de sortie afin d'absorber, pour une part, ces variations de débit.

La présente invention propose un dispositif qui permet donc d'adapter les circuits de réseaux au débit de la liaison à laquelle ils sont reliés et qui ne nécessite pas forcément, au niveau des circuits de réseau, de files d'attente et de moyens de gestion qui doivent leur être associés.

Pour cela, un tel dispositif est remarquable en ce qu'il comporte en outre :
- un organe d'allocation pour allouer des temps de prélèvement de cellules sur ladite ligne de données à chacun des circuits de sortie en fonction du débit à écouler par lesdits circuits de sortie.

La description suivante, accompagnée des dessins ci-annexés, le tout donné à titre d'exemple non limitatif, fera bien comprendre comment l'invention peut être réalisée.
- La figure 1 montre un réseau sur lequel est connecté un dispositif de multiplexage conforme à l'invention.
- La figure 2 montre la structure des cellules d'information transmises par le réseau.
- La figure 3 montre un dispositif de multiplexage conforme à l'invention.
- La figure 4 montre un circuit de réseau faisant partie du dispositif de la figure 3.
- La figure 5 montre un diagramme temps montrant le fonctionnement en pipe-line du dispositif de l'invention.

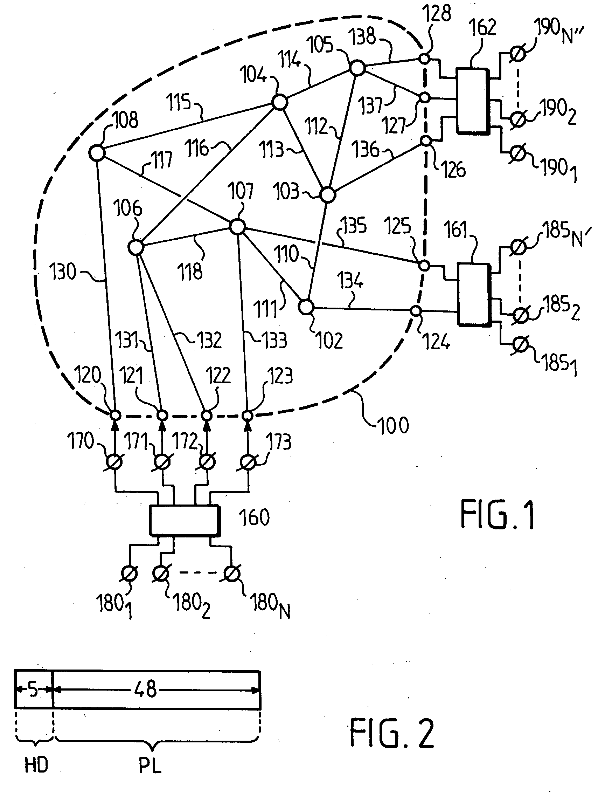

La figure 1 montre d'une manière schématisée un réseau A.T.M. portant sur la figure la référence 100. On trouvera une description de ce réseau dans l'ouvrage
" ASYNCHRONOUS TRANSFER MODE " de MARTIN de PRYCKER paru aux éditions ELLIS HORWOOD en Angleterre. Ce réseau est constitué de différents noeuds 102, 103, 104, 105, 106, 107 et 108 reliés entre eux par des liaisons 110 à 118 pour relier respectivement les noeuds 102-103, 102-107, 103-105, 103-104, 104-105, 104-108, 104-106, 107-108 et 106-107. On a repéré par 120 à 128 différents points d'accès de ce réseau. Ces points d'accès sont respectivement reliés aux noeuds 108, 106, 107, 102, 103 et 105 par l'intermédiaire de liaisons 130 à 138 respectivement. A ces points d'accès, se connectent différents dispositifs de multiplexage et de démultiplexage 160, 161 et 162. Parmi ces dispositifs, il faut distinguer : un dispositif de multiplexage 160, objet de la présente invention, et deux dispositifs de démultiplexage 161 et 162 qui effectuent les opérations inverses de celles du dispositif 160. Pour être relié aux quatre points 120, 121, 122 et 123, le dispositif de multiplexage 160 est muni de quatre bornes de raccord 170, 171, 172 et 173. Ainsi les informations peuvent, dans le cadre de cet exemple décrit, aller du dispositif 160 vers les dispositifs 162 et 164 en transitant par le réseau 100. Ces informations à transmettre sont appliquées à une pluralité de bornes d'accès 180₁ à 180_{N} dont est pourvu le dispositif de multiplexage 160, et peuvent être fournies, entre autres, a des bornes de sortie 185₁ à 185_{N'} du dispositif 161 et 190₁ à 190_{N''} du dispositif 162. Les informations transmises dans le réseau se présentent sous forme de cellules dont l'allure est montrée à la figure 2. Ces cellules sont formées de 53 octets : 5 constituent l'entête HD et les 48 autres PL contiennent les données pour un service à transmettre accompagnées éventuellement d'informations supplémentaires pour reconstituer les données de ce service à la réception.

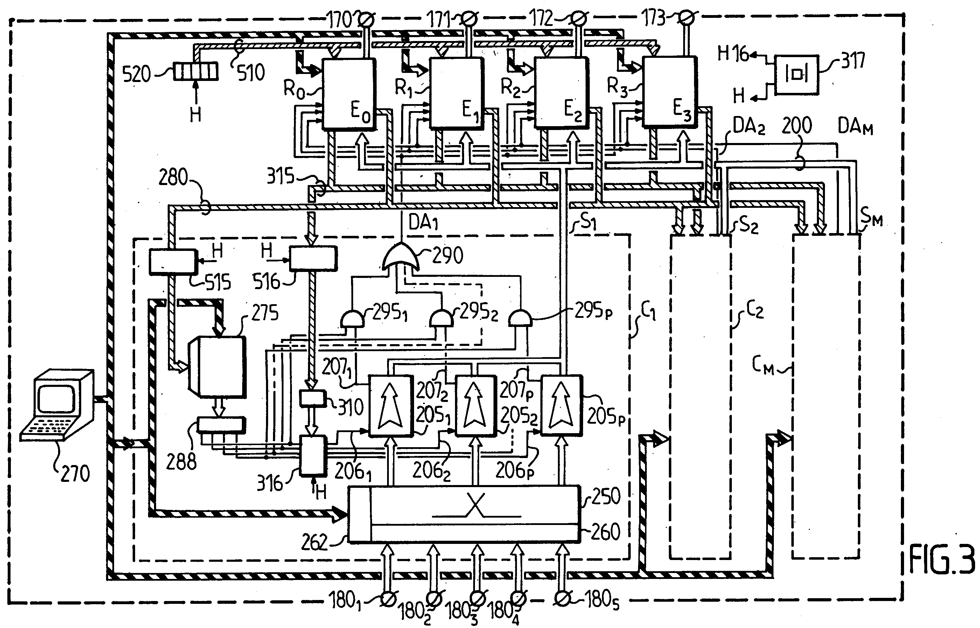

La figure 3 montre un schéma de réalisation d'un dispositif de multiplexage conforme à l'invention.

Il est composé d'une pluralité de circuits de service C₁, C₂, ..., C_{M} munis chacun d'une sortie S₁, S₂, ..., S_{M} respectivement reliée à une ligne de données commune 200 et d'une pluralité de circuits de réseau R₀, R₁, R₂ et R₃, munis chacun d'une entrée E₀, E₁, E₂ et E₃ reliée aussi à cette ligne commune 200.

A chacun des circuits de service C₁, C₂, ..., C_{M} sont rattachées des bornes d'accès d'utilisateurs : les bornes 180₁ à 180₅ pour le circuit C₁ et les bornes 180₆ à 180_{N} (non représentées sur la figure 3) pour les autres circuits. En principe, ces circuits C₁, C₂, ..., C_{M} sont chacun affectés à un service donné. Par exemple, le circuit C₁ est affecté aux liaisons vidéo genre vidéoconférence, le circuit C₂ aux liaisons téléphoniques et le circuit C_{M} à des prolongations de réseaux locaux.

Chaque circuit C₁, C₂, ..., C_{M} comporte au moins un organe de file d'attente formé à partir d'une mémoire du genre F.I.F.O (première donnée entrée, première donnée sortie). Ceci est en pratique réalisé au moyen d'une mémoire vive munie de circuits de lecture et d'écriture indépendants. On a repéré par 205₁ à 205_{P} les différents organes de file d'attente contenus dans le circuit C₁. Ces organes permettent de stocker différentes cellules d'informations avant leur passage au travers du réseau 100. Pour chacun de ces organes, on a affecté deux fils 206₁ à 206_{P} d'une part et 207₁ à 207_{P}, d'autre part, pour transmettre respectivement un signal de commande de lecture et un signal de mémoire vide ou, en d'autres termes, un signal pour indiquer si la mémoire contient ou non au moins une cellule. Un organe de commutation 250 permet de commuter les différentes bornes d'accès sur les organes de file d'attente 205₁ à 205_{P}. Cet organe de commutation 250 peut être couplé à un formateur de cellules 260 au cas où celles-ci ne seraient pas formées au niveau de l'utilisateur. Ceci n'a pas besoin d'être décrit plus en détail car l'invention n'est pas concernée par cela. Les commutations effectuées par l'organe 250 sont définies par une table 262. Cette table est inscrite au moyen d'un organe de gestion 270, qui peut être constitué par un ordinateur individuel genre PC, pour faire une correspondance entre une des bornes d'accès 180₁ à 180₅ sur laquelle un utilisateur est connecté et un des organes de files d'attente 205₁ à 205_{P}.

Une table formée par une mémoire 275 permet de gérer à l'intérieur des circuits de service l'accès des différents organes de file d'attente à la ligne 200. Cette table, inscrite aussi à partir de l'organe de gestion 270, permet d'affecter un organe de file d'attente à un code de destination étant la concaténation d'un V.P.I. ("Virtual Path Identifier") et d'un identificateur du point d'accès réseau. Le V.P.I. est constitué de 8 éléments binaires et comme le nombre d'accès réseau est de 4 dans l'exemple décrit ici, une destination donnée est donc représentée par un code de 10 éléments binaires. Cette table est adressée par différents codes de destination provenant d'une première ligne de service 280 commune à tous les circuits de service C₂, ..., C_{M}. Cette table fournit, en correspondance, le code validant ou non un organe de file d'attente 205₁ à 205_{P}. Un registre 288 emmagasine ce code de validation. Une porte OU 290 fournit un signal DA1 qui, actif, signale qu'au moins un organe de file d'attente du circuit C1 concerné par le code d'accès contient au moins une cellule. Ceci est déterminé par un ensemble de portes ET 295₁ à 295_{P} à deux entrées ; une première reçoit le signal d'affectation provenant du registre 288 et la seconde le signal transmis par les fils 207₁ à 207_{P}. Les entrées de la porte OU 290 reçoivent les signaux de sortie des portes 295₁ à 295ₚ.

Comme chaque circuit de service est affecté d'un code d'identification, un circuit de décodage 310 fournit un signal actif lorsqu'un code correspondant au code d'identification du circuit de service est transmis par une deuxième ligne de service 315. Le signal de décodage issu du circuit 310 permet la sélection d'un des organes de file d'attente, s'il y en a un de concerné par cette opération, par l'intermédiaire d'un circuit de validation 316 qui laisse passer les codes contenus dans le registre 288 à chaque front d'un signal H fourni par une horloge 317 et de ce fait, active la lecture de l'organe de file d'attente concerné pour qu'une cellule soit émise sur la ligne 200.

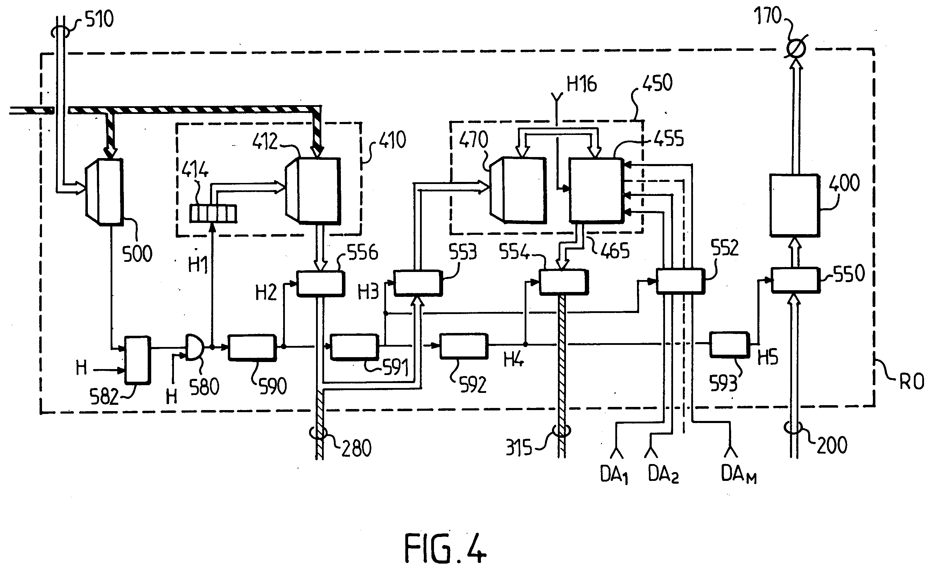

La figure 4 montre plus en détail la structure du circuit de réseau R0, étant entendu que les autres circuits R1, R2 et R3 peuvent avoir la même structure.

Le circuit R0 comporte un circuit de sortie 400 qui relie la ligne commune 200 à la borne de raccord 170.

Il comporte aussi un organe d'affectation 410 pour fournir des codes de destination en des temps bien définis.

L'organe 410 est muni d'une table d'affectation constituée par une mémoire vive 412 contenant des codes de destination répartis d'une manière qui sera explicitée ci-dessous et d'un organe de lecture de table prévu pour prélever lesdits codes de destination. L'organe de lecture est constitué par un compteur d'adressage 414 de ladite mémoire. Ce compteur compte des impulsions H1 à cadence fixe de sorte que la mémoire est lue d'une manière cyclique.

Ce circuit R0 comporte encore un circuit d'arbitrage 450. Ce circuit est formé d'un circuit de traitement 455 dont les sorties 465 fournissent le code d'identification du circuit de service auquel on a accordé l'accès à la ligne 200. Une mémoire de statut 470 qui contient des états antérieurs et notamment le code d'identification du dernier circuit de service qui a obtenu l'accès pour une des 256 destinations accessibles à partir de cet accès réseau, le champ V.P.I. ayant 8 éléments binaires de large. Les entrées du circuit de traitement 455 sont constitués, d'une part, par les signaux DA1, DA2, ..., DA_{M} transitant par un registre tampon 472 et d'autre part par le code de destination transmis sur la ligne 280.

Conformément à l'invention, le dispositif de multiplexage d'informations comporte, en outre, un organe d'allocation pour allouer des temps de prélèvement de cellules sur ladite ligne de données 200, à chacun des circuits de sortie en fonction du débit à écouler par lesdits circuits de sortie. Cet organe est constitué à partir d'une table d'allocation se présentant sous la forme d'une mémoire 500 qui est adressée par un code de numéros d'intervalle de temps TS transmis par une ligne 510 commune à tous les circuits de réseau R0, R1, R2 et R3. Ces codes d'intervalle de temps sont élaborés par un compteur 520 (fig. 3) comptant les impulsions du signal H.

La mémoire 500 est organisée en mots d'un seul élément binaire et a un nombre d'emplacements égal à la capacité de comptage du compteur 520. Dans le cadre de cet exemple : 64. Dans les emplacements de cette mémoire 500, on dispose des indications d'allocation. Ainsi, on met un "1" logique pour signifier que le circuit de réseau est concerné par ce code d'intervalle de temps et un "0" pour signifier qu'il n'est pas concerné. Cette mémoire 500 est pré-programmée au moyen de l'organe de gestion 270 d'une manière explicitée ci-dessous.

Si les débits à transmettre par les circuits de réseau sont faibles, on peut multiplier leur nombre sans saturer la capacité de transmission de la ligne 200.

Conformément à un autre aspect de l'invention, le dispositif de multiplexage d'information décrit comporte des registres de pipe-line qui autorisent un fonctionnement en pipe-line. Ces différents registres sont cadencés au rythme du signal d'horloge H.

Sur le circuit de service C₁, des registres de pipe-line 515 et 516 sont insérés dans les lignes de service 280 et 315. Les autres circuits C₂ à C_{M} sont aussi évidemment équipés des mêmes registres.

Sur le circuit de réseau R0, un premier registre de pipe-line 550 interconnecte la ligne de données commune 200 avec le circuit de sortie 400 ; ce registre est chargé au rythme d'un signal H5. Un deuxième registre 552 et un troisième registre 553 chargé au rythme d'un signal H3 fournissent les différentes informations à traiter par le circuit d'arbitrage 450. D'une part le registre 552 reçoit les différents signaux DA₁ à DA_{M} et d'autre part le registre 553 reçoit le code transmis par la ligne de service 280. L'information élaborée par ce circuit d'arbitrage 450 est reçue par un quatrième registre 554 au rythme d'un signal H4. Un cinquième registre 556 interconnecte la sortie de l'organe d'affectation 410 avec la ligne de service 280.

Les signaux H2, H3, H4 et H5 se déduisent du signal H1 par des décalages temporels successifs égaux chacun à une période du signal H. Le signal H1 est dérivé du signal H par une porte ET 580 à deux entrées dont une reçoit donc le signal H et l'autre la valeur de l'élément binaire contenu dans la mémoire 500 préalablement validé. Cette validation est effectuée au rythme du signal H au moyen d'une bascule 582.

Des éléments de retard 590, 591, 592 et 593 montés en cascade à la sortie de la porte 580 fournissent respectivement les signaux H2 à H5. Ces éléments de retard apportent un retard égal à la période citée ci-dessus.

Le fonctionnement du dispositif de multiplexage d'informations de l'invention est le suivant.

### a) - FONCTIONS DE L'ORGANE DE GESTION.

Cet organe de gestion 270 est l'interface entre un gestionnaire de gestion qui manipule cet organe et les utilisateurs, d'une part, et un gestionnaire de réseau, d'autre part.

Le gestionnaire détermine les connexions à faire entre les différentes bornes d'accès et les organes de file d'attente. Le gestionnaire du dispositif communique avec le gestionnaire du réseau pour réserver un accès avec un certain débit. Ce dernier fournit à la suite de cette demande un code de destination représentant sous une forme raccourcie, ainsi qu'il l'a été dit, la destination voulue par le destinataire. C'est à partir de cet organe que les différentes mémoires tables 262, 275, 412, 470 et 500 sont chargées en fonction du trafic à satisfaire.

### b) - ALLOCATION DES TEMPS DE PRELEVEMENT DE CELLULES PAR LES CIRCUITS DE RESEAU.

Dans le cadre de l'exemple décrit les cellules peuvent être envoyées sur chaque lien d'accès au réseau 100 à un rythme maximal de 149,76.10⁶ eb/s (éléments binaires par seconde). Les codes d'intervalle de temps TS varient de 0 à 63 et de ce fait le compteur 520 est un compteur modulo 64. Comme les circuits de réseau sont tous appelés à transmettre avec ce rythme maximal, on alloue au maximum 16 codes de temps TS parmi les 64 à chacun des circuits de réseau. Pour un même circuit de réseau, les codes de temps TS alloués doivent être séparés d'au moins 3 codes de temps TS. La période du signal H est donc de 707,5 ns.

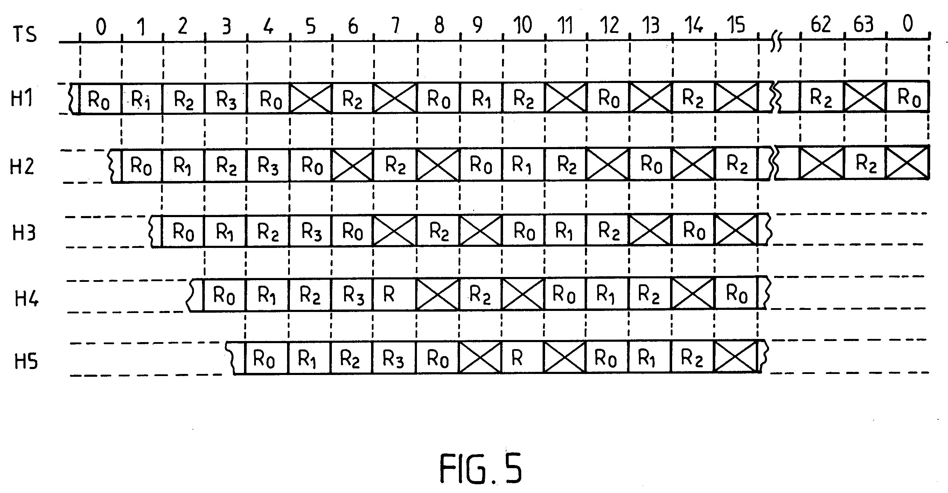

A la figure 5, on a représenté un exemple d'allocation de ces intervalles de temps TS. Ainsi le circuit R0 est affecté au débit maximal, 16 codes TS lui sont alloués soit : les codes "0", "4", "8", "12", ... Le circuit R1 est affecté à un débit deux fois moindre. Les codes TS "1", "9", ... lui sont alloués. Le circuit R2 est affecté lui aussi à ce débit maximal les codes "2", "6", "10", "14", ..., "62" lui sont alloués. Le circuit R3 est affecté à un débit lent et un seul code de temps TS lui est alloué soit "4".

### c) - FONCTIONNEMENT DE L'ORGANE D'AFFECTATION 410.

Cet organe d'affectation 410 définit des temps d'accès à ligne commune 200 aux organes de file d'attente contenus dans les différents circuits C₁, C₂, ..., C_{M} pour que des cellules soient émises sur la borne de raccord 170 via la ligne commune 200 et le circuit de sortie 400. La mémoire 412 contient des codes de destination répartis d'une manière explicitée ci-dessous et le compteur de lecture 414 est prévu pour adresser cette mémoire à la cadence du signal H1 de sorte que la mémoire est lue en permanence d'une manière cyclique. Ceci fixe la cadence d'apparition desdits codes de destination.

Cette mémoire 412 est programmée également à partir du terminal de gestion 270. Un gestionnaire prend en compte les demandes de débit pour les différentes destinations et formule une demande pour obtenir les ressources nécessaires du réseau pour le trafic envisagé. Cette demande est transférée au gestionnaire du réseau qui fournit le code de destination constitué d'un V.P.I. et d'un code identifiant le circuit d'accès réseau. Le gestionnaire inscrit ensuite ce code de destination dans la mémoire 412 en fonction des considérations suivantes.

La fréquence des impulsions d'horloge fixe le débit maximal susceptible d'être transmis. Soit en prenant un exemple pratique 149,76.10⁶ eb/s (éléments binaires par seconde), donc la période pour les impulsions H1 ne peut pas être inférieure à 2,83 µs. Ainsi, si le trafic exigé pour une destination est ce débit maximal, tous les emplacements de la mémoire seront concernés par ce service. La taille de cette mémoire est définie en partie par le débit minimal dₘᵢₙ à assurer par exemple : 4,5 10³ eb/s. La taille de la mémoire est alors de 32 768 emplacements. Cette taille est aussi définie par la granularité des débits à transmettre, c'est-à-dire l'ensemble des débits différents que l'on peut transmettre. Plus le nombre de débits possibles est grand, plus la taille de la table sera grande.

### d) - CIRCUIT D'ARBITRAGE.

La mémoire 470 contient autant d'emplacements mémoires qu'il y a de codes V.P.I. possibles soit : 256. Le mécanisme d'arbitrage choisi est celui de la priorité tournante, pour chacune des destination, décrite dans
" DISTRIBUTED-PROCESSOR COMMUNICATION ARCHITECTURE " de Kenneth J. Thurber, et Gerald M. Masson, paru dans Lexington Books, Heatch., Chapitre 5, pages 140 et 141. Etant donné ce mécanisme, la mémoire 470 ne nécessite aucune initialisation.

La priorité est déterminée en plusieurs phases de calculs déterminées par un signal d'horloge H16 qui a une fréquence seize fois plus élevée que celle des signaux H.

Le contexte d'arbitrage, pour une destination donnée, est stocké dans la mémoire 470, à une adresse déduite du numéro de V.P.I. correspondant à cette destination.

Une séquence d'arbitrage se décompose alors selon les phases suivantes :
- on prélève dans la mémoire 470 le contexte d'arbitrage relatif au code de destination V.P.I.,
- on réalise l'arbitrage entre les différents circuits d'accès, selon le mécanisme de priorité tournante,
- on émet sur la ligne 315 le code du circuit qui a gagné l'accès,
- on enregistre dans la mémoire 470 le nouveau contexte d'arbitrage relatif au code de destination V.P.I.

### e) - FONCTIONNEMENT DU PIPE-LINE.

La figure 5 illustre bien ce fonctionnement.

Lorsque TS = "0", un élément binaire de valeur "1" est présent à la sortie de la bascule 582 du circuit de réseau, ce qui fait apparaître le signal H1. C'est la phase d'allocation.

Lorsque TS = "1", le code de destination provenant de la mémoire 412 du circuit de réseau est émis sur la ligne de service 280. C'est la phase d'appel pour une destination.

Ce code est analysé au niveau de chaque circuit de service au moyen de la mémoire 275. Si un des organes de file d'attente est concerné par cette destination le signal DA1 est actif. Les signaux DA₁ à DA_{M} provenant de tous les circuits de service sont analysés par le circuit de réseau R0 lorsque TS = "2". C'est la phase de demande d'accès de la ligne de données.

Le circuit d'arbitrage du circuit de réseau R0 donne son verdict lorsque TS = "3". C'est la phase d'accord pour un accès à la ligne commune.

Lorsque TS = "4", la cellule de l'organe de file d'attente concerné est émise sur la ligne de données. C'est la phase d'émission de données.

Un système comprenant un tel dispositif peut être formé à partir d'un réseau du type montré à la figure 1. Ce système permet alors l'échange d'informations entre des noeuds de ce réseau via un dispositif conforme à l'invention.

## Revendications

1. Dispositif de multiplexage d'informations pour un réseau du genre A.T.M. notamment, qui transmet d'un de ses points d'accès à un autre des cellules d'informations, dispositif comportant :
- une pluralité de bornes d'accès pour des utilisateurs ayant des informations à transmettre vers une certaine destination avec un certain débit,
- une pluralité de bornes de raccord pour une pluralité de points d'accès dudit réseau,
- une pluralité de circuits de service munis d'organes de files d'attente pour emmagasiner des données d'utilisateur et pour fournir sur des sorties de données les cellules à transmettre,
- une ligne commune de données interconnectant les sorties de données desdits circuits de service,
- une pluralité de circuits de réseau munis de circuits de sortie dont les entrées sont connectées à ladite ligne de données et dont les sorties sont connectées auxdites bornes de raccord,
caractérisé en ce qu'il comporte, en outre :
- un organe d'allocation pour allouer des temps de prélèvement de cellules sur ladite ligne de données à chacun des circuits de sortie en fonction du débit à écouler par lesdits circuits de sortie.

2. Dispositif de multiplexage d'informations selon la revendication 1, caractérisé en ce que l'organe d'allocation est constitué à partir d'une table d'allocation affectée aux circuits de réseau comportant des emplacements pour contenir une indication d'allocation et à partir d'un circuit générateur de codes de numéros d'intervalles de temps pour lire lesdites tables afin de déterminer un temps de prélèvement à la lecture de l'indication d'allocation.

3. Dispositif de multiplexage d'informations selon la revendication 1 ou 2, caractérisé en ce que chaque circuit de réseau comporte un organe d'affectation pour fournir des codes de temps d'accès à ladite ligne de données pour les organes de files d'attente en des temps définis par lesdits temps alloués.

4. Dispositif de multiplexage d'informations selon la revendication 3, caractérisé en ce que chaque circuit de réseau comporte un organe d'arbitrage pour déterminer l'organe de file d'attente autorisé à émettre une cellule lorsque plusieurs d'entre eux sont concernés par le même code de destination.

5. Dispositif de multiplexage d'informations selon l'une des revendications 1 à 4, caractérisé en ce qu'il est prévu des registres de pipe-line pour autoriser un fonctionnement en pipe-line.

6. Dispositif de multiplexage d'informations selon la revendication 5, caractérisé en ce que les registres de pipe-line sont agencés pour que différentes phases de fonctionnement soient executées :
- une phase d'allocation qui détermine le temps de prélèvement pour le circuit de sortie du circuit de réseau concerne,
- une phase d'appel pour une destination effectuée par l'organe d'affectation,
- une phase de demandes d'accès à la ligne de données effectuées par les circuits de service concernés par ladite destination,
- une phase d'accord pour un accès à la ligne commune effectuée par ledit organe d'arbitrage,
- une phase d'émission de données effectuée par le circuit de sortie.

7. Système comprenant au moins un dispositif selon l'une des revendications 1 à 6 connecté à un noeud d'un réseau pour transmettre des informations à partir desdites bornes d'accès vers au moins un noeud dudit réseau.
